# EUROPEAN PATENT SPECIFICATION

(11) **EP 4 331 211 B1**
(45) Date of publication and mention of the grant of the patent: **20.08.2025**
(21) Application number: 22725579.1
(22) Date of filing: 04.04.2022
(51) Int. Cl.: H04L 67/2866, H04L 61/5038, H04L 61/5061, H04L 45/7453, H04L 67/568, H04L 61/5053, H04L 67/02

(54) **CONSISTENT HASHING FOR COMMUNICATION DEVICES**
KONSISTENTES HASHING FÜR KOMMUNIKATIONSVORRICHTUNGEN
HACHAGE COHÉRENT POUR DISPOSITIFS DE COMMUNICATION

(30) Priority: 29.04.2021 US 202163181749 P; 28.05.2021 US 202117333979
(43) Date of publication of application: 06.03.2024
(73) Proprietor: Microsoft Technology Licensing, LLC, Redmond, WA 98052-6399 (US)
(72) Inventor: QIAN, Haibo, Redmond, Washington 98052-6399 (US); BROWN, Michael Anthony, Redmond, Washington 98052-6399 (US); MURALIDHARAN, Srinivasan, Redmond, Washington 98052-6399 (US); BAID, Akash, Redmond, Washington 98052-6399 (US)
(74) Representative: CMS Cameron McKenna Nabarro Olswang LLP
(86) International application number: PCT/US2022/023246
(87) International publication number: WO 2022/231780

(56) References cited:
- US-A1- 2018 004 745
- US-B1- 9 130 846

## Description

### Background

Mobile data communication involves the allocation of resources and processing services over a network. When processing information for a particular user or device, the device contacts a network-based service, which recognizes the device and retrieves state information (e.g., subscriber records, session states) relevant to the device from one or more databases. In some scenarios, performance can be increased by connecting an interface associated with a particular user or device to cached state information corresponding to that particular user or device, rather than retrieving the state information from the one or more databases for each request. However, existing approaches do not efficiently accommodate state information caching, particularly in modern mobile wireless communication systems that adopt a cloud-native architecture.
US 9130846 B1 describes exposing access to network metrics to a late binding user customized set of computer instructions within a traffic manager device (TMD) for use in managing a request for a resource. The TMD may be interposed between client devices and a plurality of network devices. Request specific data is extracted from a client request received by the user's instructions. Various network metrics about the network devices are provided to the user's instructions to selectively provide the request from the client device to a network device. An election hash is described as an action performed by the user's instructions.
US 201800475 A1 describes a distributed storage system includes a service tier including a service node to receive a request for a logical object comprising binary data and metadata describing the binary data, and a storage tier including a plurality of storage nodes, wherein one or more of the storage nodes is to store the metadata describing the binary data. The distributed storage system also includes a coordination tier to store mapping information identifying the one or more of the storage nodes storing the metadata. The service node is also to receive the mapping information from the coordination tier, to access the metadata describing the binary data from one of the one or more of the storage nodes based on the mapping information, and to return the metadata describing the binary data in a response to the request.

### Summary

The invention is set out in the appended set of claims.
The described technology provides implementations of systems and methods for allocating computing resources. More specifically, the described technology provides implementations of systems and methods for allocating resources that are associated with a device being served by the communication systems.

A method for allocating a device-specific resource from one or more databases is provided. The method includes receiving an initial processing request from a device; generating a device-specific resource based on the device, responsive to the initial processing request; associating a pool identifier with the device and the device-specific resource; generating a coupling identifier based on the pool identifier and a resource identifier; and associating the coupling identifier with data, comprising the device specific resource, in a cached object from the one or more databases; transmitting the coupling identifier to the device, the device being a requesting entity; and subsequently: receiving, at an interface, the coupling identifier including the pool identifier and the resource identifier, as part of a processing request from the requesting entity, the processing request including a request for the device-specific resource, wherein the coupling identifier associates the requesting entity with the device-specific resource based on the resource identifier; extracting, at the interface, the pool identifier from the coupling identifier; identifying, by the interface, the processing service in which the device-specific resource associated with the resource identifier is cached, based on the pool identifier; and transmitting, from the interface to the identified processing service, at least a part of the processing request to process the cached requested device-specific resource.

This summary is provided to introduce a selection of concepts in a simplified form that is further described below in the Detailed Description. This summary is not intended to identify key features or essential features of the claimed subject matter, nor is it intended to be used to limit the scope of the claimed subject matter.

Other implementations are also described and recited herein.

### Brief Descriptions of the Drawings

FIG. 1 illustrates an example system for allocating resources for device requests.
FIG. 2 illustrates another example system for allocating resources for device requests.
FIG. 3 illustrates an example system for assigning and using a temporary ID.
FIG. 4 illustrates example operations of using a temporary ID for communication requests.
FIG. 5 illustrates example operations of assigning a temporary ID for communication requests.
FIG. 6 illustrates an example computing device for implementing the features and operations of the described technology.

### Detailed Descriptions

A communication service, such as in a cellular communication network or a mobile communication network, is expected to interact with devices having any number of protocols. In some systems, the processing engine (e.g., a processing service) stores the data to be processed locally. A disadvantage of such systems is that if the processing engine crashes, data being accessed by that processing engine for many different users can be lost. Further, dynamic assignment of processing services for any address space or communication protocol can better utilize storage and processing power.

A communication system may use a cloud-native architecture, which decouples the data from the processing engine used to process the data, facilitating more dynamic use of system resources. Such decoupling also reduces the risk of massive data loss from a crash of a particular instance of processing service. In implementations, the interfaces of the cloud-native architecture are dynamically assigned to devices attempting to access a network. Linking a device with an interface, linking the interface with a processing service, and fetching data from a database to accomplish the needs of the processing service may benefit from a uniform system for identification that links data in the database and the requesting device.

5G is a fifth-generation cellular data network standard with service areas of 5G networks composed of geographical cells. The 5G standard allows for greater bandwidth than prior network communication generations. To identify devices, 5G networks allocate globally unique temporary identifiers (GUTIs) relatively frequently, so using the GUTI infrastructure for interface identifiers may be less practical than basing IDs on other elements, such as static elements of device and network equipment or application-specific ones assigned and stored.

A cloud-native system may benefit from the dynamic assignment of temporary IDs that are associated with particular devices. By making the IDs temporary, the temporary IDs can be readily assigned, if necessary, for new devices. The system may make a uniform ID structure across all devices and platforms to avoid some of the most significant limitations of individual permanent IDs supplied by devices. Further, because of the independence of the interface services, processing services, and database storage relative to one another in a cloud-native environment, temporary IDs can also more efficiently utilize the resources provided.

Cloud-native systems provide advantages, but some systems make it difficult to know whether a processing service that recently processed a request for a particular device still has the data for that device cached. However, various implementations of the described technology increase the likelihood that the device's request is routed to a processing service that has cached the resources for that particular device. For this, consistent hashing can provide request distribution that is more likely to result in cache hits. A challenge for consistent hashing has been the disparity in interfaces between communication devices and interfaces between the communication server system and its peer communication server system in serving communication devices. This can be overcome by assigning each device and peer communication server a coupling ID with a similar format across interfaces. Coupling IDs may be identifiers for specific interfaces between entities and a cloud communication server that may be device-specific (e.g., specific to a user equipment unit or mobile device) and used to reference device-specific resources. The coupling IDs can associate the interfaces with device-specific resources in order to retrieve the device-specific resources from a database or from cache of a processing service when the entities make a device-related processing request. In an implementation, a coupling ID is a temporary ID that may change, perhaps based on requirements of the network of the cloud communication server. In this specification, any implementation contemplated for a temporary ID is also contemplated for a coupling ID which may or may not be temporary. Each temporary ID may have a pool ID, representing a pool within an address space of available resource IDs that are associated with the pool. If there are a sufficient number of pools, it increases the likelihood that any particular device assigned to a pool will be assigned to a processing service that, at least temporarily, has data from devices assigned to that pool. The pool ID may be usable to represent a pool of resource identifiers in an address space. The pool ID may be common across all interfaces and, correspondingly, across all resource IDs of the device, each associated with an interface.

The pools may be divisions of different address spaces, the address spaces perhaps representing different types of interfaces with different types of temporary identifiers, addressing elements, or interfaces. Each device may be assigned a pool identifier such that the device will only pull temporary resource identifiers from the relevant pool. The resource identifiers can be concatenated, encoded, or otherwise joined with the pool identifiers to make temporary identifiers. When a processing service is assigned to a task for a device, the task can be associated with the pool ID. The processing service may keep the data associated with the device in cache for a time after the first use. Then, when the same or another interface later makes a request to the system from another system (e.g., a user device or a server communication system), the interface may take the temporary identifier received in the incoming request, extract the pool ID, and use the pool ID to identify a processing service that has recently been associated with the pool. The pool ID may be used by hashing the pool ID and associating it in a table with processing services that still have cached data from a prior request. The processing service may use the coupling ID, temporary ID, and/or resource ID to determine whether device data is still locally cached. These cache hits may save considerable processing resources while reducing traffic and latency of operations.

Dividing resources into pools can allow the system to distribute resources more uniformly instead of static addressing that can tax frequently used static elements. Further, adding or removing processing services can be taxing in existing systems, causing issues with scaling out. The coupling or temporary IDs may allow for more dynamic scaling and load balancing. The consistency of the coupling or temporary IDs given a device for each interface by giving them common pool IDs allows for a more convenient allocating mechanism to allocate communication server system requests to processing services more likely to have cached resources associated with a particular device.

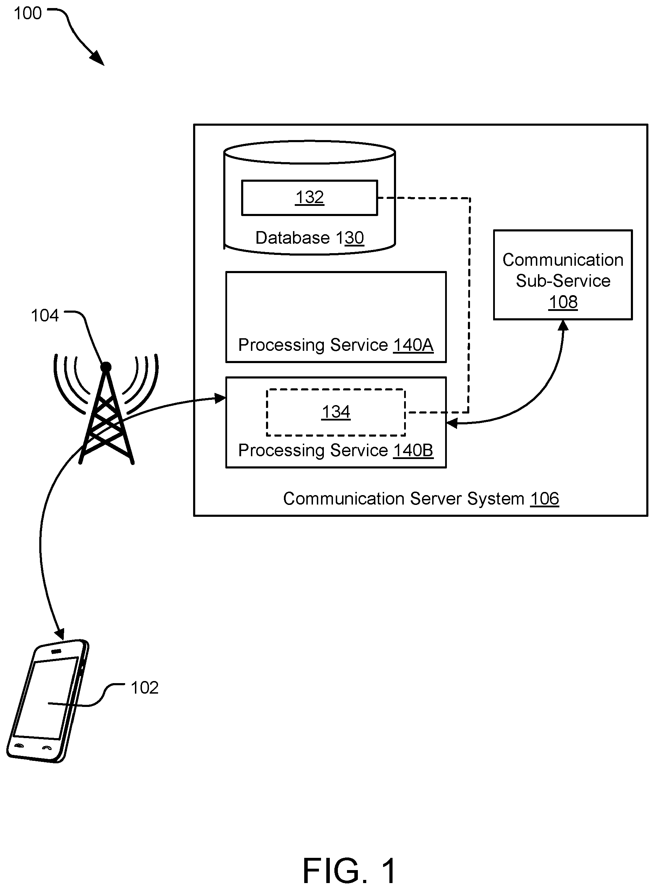

FIG. 1 illustrates an example system 100 for allocating resources for device requests. In FIG. 1, a device 102 communicates with a communication server system 106 over a communication network 104. The device 102 may be any communication device, for example, a cellular phone, laptop computer, tablet, or 2-in-1 hybrid. The device 102 transmits a processing request for an operation that involves data associated with the device 102 to the communication server system 106. The processing request includes a coupling ID. The coupling ID associates the requesting entity with a device-specific resource in one or more of a cache of a processing service 140A, 140B or a database 130 of the communication server system 106. While the requesting entity is illustrated as the device 102, the requesting entity may be any entity for which retrieval of device-specific data may be useful. For example, the requesting entity may be a radio of the communications network 104, a communication sub-service 108, or a peer communication server system. In an implementation, the coupling ID is a temporary ID that temporarily identifies the device to the communication server system 106. Implementations are contemplated where the coupling ID is not a temporary ID, but the terms coupling ID and temporary ID may be used interchangeably to reference analogous elements throughout this specification. The initial request from the device may use a permanent identifier (e.g., an IMSI) or a concealed version of a permanent identifier. Upon successful initial request, the Communication Server System 106 may allocate a temporary identifier to the device 102. The device 102 may use the received temporary identifier for future requests to the communication server system 106.

The temporary ID includes a pool ID and a resource ID. The pool ID represents a particular pool of resource IDs in an address space. An address space may be specific to a particular interface for which the temporary identifier is allocated. Each address space has a number of pools, and in an implementation, the number of pools is the same for each address space. The distribution into pools may improve load balancing and may improve the likelihood that any given device 102 making a request can target a processing service 140B that has data associated with the device 102 cached in the processing service 140B. The communication server system 106 may also attempt to balance the number of assigned resource IDs between the pools to better facilitate load management.

The communication server system 106 has a plurality of interfaces and a plurality of processing services 140A, 140B. The interfaces may be of different types and foster communications between the communication server system 106 and entities, such as a radio, the device 102, peer communication server systems, and the communication sub-service 108. For instance, there may be interfaces to the radio of a communication network 104 and/or the device 102 or interfaces to serving gateways. For each type of radio interface for a radio in communication network 104 and/or the device 102, the communication server system 106 may have multiple micro-services to handle requests from radios. Any requests from the device 102 may be carried in messages from a radio and may be handled by any of the microservices handling requests from radios. The interfaces can also have a different set of micro-services to handle messages received from the serving gateway or other communication subsystem. The plurality of interfaces and the plurality of processing services can be assigned to any device 102 or communication server system 106 requests and may be agnostic to the particular device 102 and/or device type. An interface receives requests from a network function for device 102 and uses a temporary ID assigned to or for the device 102 to determine to which pool the device 102 has been assigned and to which resource ID within the pool the device interface has been assigned. The interface extracts or otherwise parses the pool ID from the temporary ID using an ID extractor, and a message router uses the pool ID to associate the device request with a processing service 140A, 140B that has recently performed operations on items associated with the same pool.

A messaging router may transmit from the interface to the identified processing service 140A, 140B at least a part of a processing request to process the cached requested resource, the processing request perhaps based at least in part on the hashed pool identifier. The message router may include an HTTP proxy to apply hashing and a router or distributor, depending on the system. For example, in an implementation, the message router hashes the pool ID and refers the request to a correspondingly hashed processing service 140A, 140B to increase the likelihood that the assigned processing service 140A, 140B has cached device data 134 associated with the device 102. Requests can be made on behalf of the device 102, whether by the device 102 itself or by elements of the communication server system 106.

In the implementation illustrated in FIG. 1, the device 102 has a pool ID that is associated with device-specific resources, herein referred to as device data 132, contained in cache or local memory of a processing service 140B. In this implementation, as illustrated by the dashed line, the device data 132 has been copied in a prior operation from the database 130 and stored in the cache of the processing service 140B as cached device data 134. The device data 132 and cached device data 134 may contain all relevant information or device state information for the particular user or device 102. The processing request from the device 102 has been assigned to the processing service 140B that has the cached device data 134 associated with the device 102. The operation can be considered a cache hit that makes a second retrieval operation for the same data from the database 130 unnecessary. While shown as a processing request from the device 102, the processing request may come from any requesting entity, for instance, a gateway, a radio of the communications network 104, a peer communication server system, or the communication sub-service 108. Determining whether the cache of the processing service 140A, 140B has cached device data 134 may involve searching a cache of the processing service 140B for the cached requested resource using at least part of the temporary ID, for example, the resource ID. Because an interface of the communication server system 106 was able to identify the processing service 140B using a pool ID associated with the device 102, the processing service 140B was chosen as opposed to processing service 140A to execute the device request. Processing service 140A does not have the cached device data 134. If the interface had routed the device request to processing service 140A, the processing service 140A would have had to fetch the device data 132 from the database 130 to make a new cached device data 134 copy for the same device data 132. It should be appreciated that it may be unlikely for the processing service 140A to be selected if the consistent hashing is used, so it is unlikely that the 140B would have the cached device data 134 if processing service 140A is selected.

The communication server system 106 may have multiple temporary IDs for each device 102 in different address spaces. One of these identifiers may be transmitted to the device 102 itself for the device 102 to make requests to the communication server system. Other IDs are from different address spaces, each ID in each address space referring to a specific resource in device state data of the device 102 stored in the device data 132. In an example in the mobility management entity (MME) context, the device 102 may be allocated many different types of device identifiers. The mobility management entity may be an example implementation of the communication server system 106. One identifier is a globally unique temporary identifier (GUTI). The GUTI is transmitted to the device 102, and the device 102 would use the GUTI in requests. Another identifier is a tunnel endpoint ID (TEID). The TEID may be transmitted to the serving gateway and used when the MME requests that the serving gateway set up an IP address for the device 102. If, later on, the serving gateway requests to modify related to the IP address of the device 102, the serving gateway may provide the TEID back to the MME in the request to inform the MME which device 102 or device data 132 to modify.

In an implementation, a device 102 may need to go through a procedure to be initially assigned a temporary ID for future requests. The device 102 may make an initial request from the communication server system 106 using an interface service in communication with a processing service 140A, 140B. The communication server system 106 may responsively authenticate the device by an authentication method, for example, one or more of authenticating a permanent device ID (e.g., international mobile subscriber identity, international mobile station equipment identity, integrated circuit card identifier, etc.), looking up whether the device 102 has an active subscription, and a challenge to the device 102. When the device is authenticated, a processing service 140A, 140B may assign a temporary ID including a pool ID and a resource ID. The assignment of the pool ID may be strategic, for example, assigning within the appropriate address space to a pool that has fewer assigned resource IDs to balance the load. The pool ID may be used for consistent hashing to better allocate requests to processing services 140A, 140B more likely to have relevant cached device data 134. All resource IDs of a device that represent interfaces used on behalf of the device, whether the requests are from the device 102 or subsystems of the communication server system 106 (e.g., communication sub-service 108), share a common pool ID. The communication sub-service 108 may in turn receive the requests from other communication systems and subsystems. Examples of interfaces may include, for example, a relationship between Access and Mobility Management Function (AMF) and Session Management Function (SMF) in 5G or an interface between a Mobility Management Entity (MME) and a serving gateway in 4G. Using the disclosed technology with other interfaces, including earlier generation interfaces (e.g., interfaces in 3G or 2G) and interfaces of network and/or communication technology yet to be developed, is contemplated.

The temporary ID is generated from the pool ID and the resource ID. After the temporary ID is generated by the processing service 140A, 140B, the temporary ID is transmitted to the device 102 or to other communication systems or subsystems with which the communication server system 106 interfaces, and the temporary ID is associated with the relevant device and its device data 132 in the database 130. The device itself or other communication systems use the temporary ID in future requests concerning the communication server system 106. A device may have multiple temporary identifiers, one for each interface the communication server system 106 supports (e.g., interfaces with device 102 and other communication systems). All the temporary identifiers share the same pool ID and may represent elements of device state information in device data 132. Implementations in which non-numeric resources are elements of the requested network function may benefit from using static addressing between the temporary IDs and pool IDs.

In implementations, a communication sub-service 108 may need to access device data 132. The communication sub-service 108 may be, for example, one or more of a gateway service and a radio service. The communication sub-service 108 may have specific resources and/or temporary identifiers specifically representing the device 102 and the interface between the communication sub-service 108 and the processing service 140A, 140B. These temporary IDs for the communication sub-service 108 may have the same pool IDs for the device 102 as the temporary IDs used for the interface between the device 102 and the processing service 104A, 104B. In an implementation, if there is an instance of processing service 140B with cached device data 134, whether from the same type of interface or a different type of interface, the communication sub-service 108 may route the request to the same processing service 140B based on the pool ID being the same. In this implementation, the pool ID is the same for a particular device 102, regardless of the interface, and the cached device data 134 may be sufficient to provide some or all interfaces with some or all resources necessary for requests. This may increase the likelihood of a cache hit that can reduce the computational expense and/or latency of the request. In an implementation, temporary IDs for the communication sub-service 108 and the temporary IDs for the device interfaces may be initially assigned with the same initial assignments. The resource IDs may change with time, and, correspondingly, so may the temporary IDs that derive from the resource IDs.

In implementations, the pool ID may persistently associate with and/or be valid for the device, for example, for one or more of a lifecycle of the device 102, a subscription period of the device 102, or for all interactions between the device 102 and the communication server system 106 over a predefined period. In implementations, resource IDs may be stored in the state information in the database 130 that is associated with the device 102. The temporary identifier may be used to find the state information of the device 102 from the database 130. In implementations, the temporary ID may only persist or be valid, for example, for a device 102 session, for a specific request from the device 102, for a period over which the device remains in a particular coverage area, for a predefined amount of time, or for a specific operation that requires multiple requests. In implementations, the resource ID and, hence, the temporary ID may be valid for less time than the pool ID. The period over which the temporary ID is valid may vary with the interface and with the type of device.

In implementations, the temporary ID may be an unencoded ID with no manipulation of the pool ID and resource ID. In other implementations, the temporary ID may be encoded, cyphered, or otherwise manipulated to mask the represented pool ID and resource ID. The encoded implementation may be advantageous in situations where there is a danger of discovering the temporary ID. An example of this is when there are a large number of pools, each with only a few resource IDs. This scenario would make it more likely that a particular pool ID will have a predictable resource ID from a very limited supply and make an unencoded ID easier to interpret and misuse. In implementations where the coupling ID is not a temporary ID, the coupling ID may be more persistent, perhaps as persistent as a pool ID.

Service-based interfaces (SBIs) or other interfaces used between the Communication server system 106 and other communication systems may use permanent identifiers. In implementations that use SBIs for communication, the communication server system 106 may provide an identification package that includes a pool ID assigned to a device 102 that identifies the device 102 to another communication server system or subsystem when requesting its service. The other communication server system or subsystem may responsively return the identification package that includes the pool ID when requesting service from this communication server system 106. The pool ID in the identification package may be used for consistent hashing for the SBI request. At the same time, the other communication server system or subsystem can also provide its own identifying package for the device 102 to the communication server system 106, which would return the identifying package in a future request to the other communication server system or subsystem.

In implementations where the message router of the interface routes the request to a processing service 140A, 140B using hashing, the hashing can be accomplished different ways. For instance, for HTTP connections, the hashing can use extended HTTP headers, cookies, or other properties. In implementations using hash-based load balancing to provide soft session affinity based on HTTP headers, the affinity to a particular destination processing service 140A, 140B may be lost when one or more processing services 140A and/or 140B are added or removed from the destination service. Examples of hashing for HTTP connections include data such as a string type hash based on a specific HTTP header, an HTTPCookie type hash based on an HTTP cookie, a Boolean type hash based on the source IP address, a string type hash based on a specific HTTP query parameter, and a uint64 type hash with virtual nodes to use for the hash ring. In the last example, the minimum number of virtual nodes to use may default to 1024. Larger ring sizes result in more granular load distributions. If the number of processing services 140A, 140B in the load balancing pool is larger than the ring size, each processing service 140A, 140B may be assigned a single virtual node. In implementations where a temporary identification package is used, for example, for SBIs, other hashing data that may be used may include one or more of a string type with a name of the identification package, a string type for a path to set for the temporary identification package, and duration type representing the lifetime of the identification package.

The communication server system 106 may also have data elements that store data associated with the processing services 140A, 140B, and the hashed pool IDs associated with data stored in the processing services 140A, 140B. This data may be persistent for as long as the related data is cached in the processing service 140A, 140B. While the cached device data 134 is cached in the processing service 140A, 140B, the database 130 may lock editing of the corresponding device data 132 in the database until the cached device data 134 is released. This data may be stored in the device data 132, in the database 130, or elsewhere.

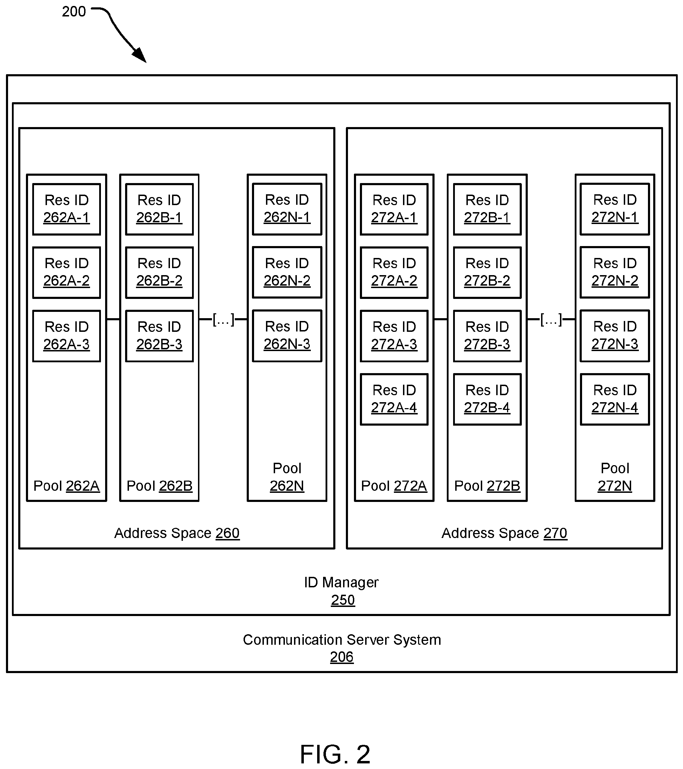

FIG. 2 illustrates another example system 200 for allocating resources for device requests. The Communication server system 206 has an ID manager 250 that contains ID information. The ID manager 250 may be organized into address spaces 260, 270. The address spaces 260, 270 may be distinguished from one another based on, for example, one or more types of devices and/or interfaces. For example, an address space might be defined as all devices that have a 32-bit space for addressing. In an implementation, each address space may be organized into the same number of pools. In the illustrated implementation, both address spaces 260, 270 are divided into N pools 262A-262N and 272A-272N. The ellipses in FIG. 2 illustrate intermediate pools between 262-B and 262-N and between 272B and 272N. While there is the same number of pools in the illustrated embodiments, it can be appreciated that the pools 262A through 262N each have fewer resource IDs than the pools 272A through 272N. However, in the illustrated embodiment, each pool within an address space 260, 270 has the same number of resource IDs, for example, three resource IDs for each of the pools 262A, 262B, 262N, and any intermediate pools not shown and four resource IDs for each of 272A, 272B, 272N, and any intermediate pools not shown. The number of resource IDs in each pool may be based on limitations of devices classified within an address space 260, 270, for example, based on limiting addressing bits in the devices. At any given time, resource IDs used or occupied may be different within each pool. When a resource ID is being used, it may be prevented from being assigned to another device resource or request. The communication server system 206 may attempt to load balance by utilizing close to the same number of resource IDs within each pool at any given time. Implementations are also contemplated where resource IDs are allocated disproportionately between pools. The communication server system 206 may be an implementation of communication server system 106.

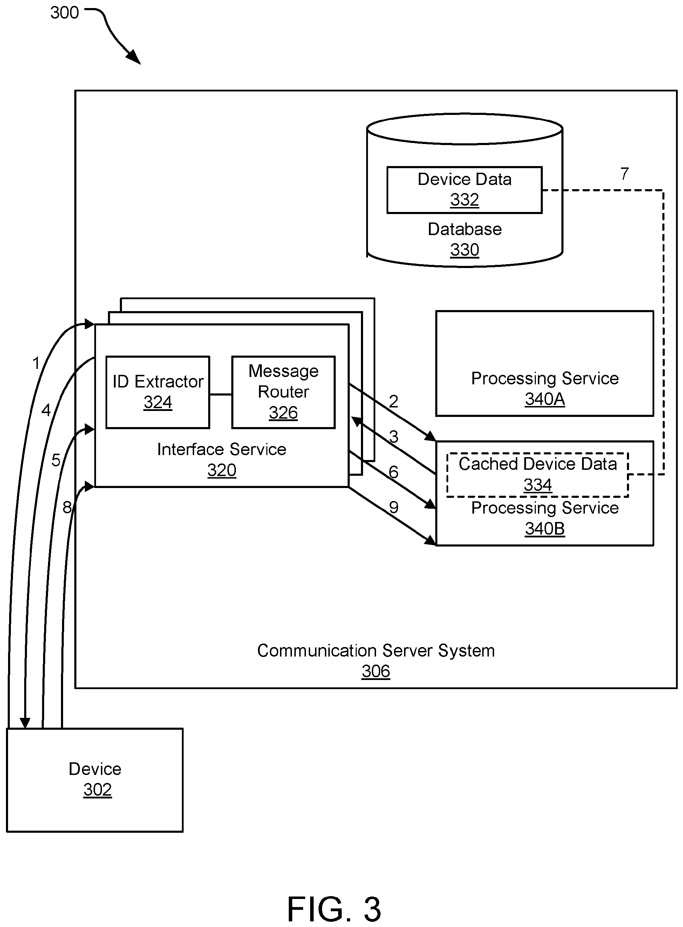

FIG. 3 illustrates an example system 300 for assigning and using a temporary ID. The device 302 communicates an initial processing request for communication services from the communication server system 306 in communication 1. While device 302 is illustrated as the requesting entity, other requesting entities are contemplated (e.g., communication sub-services, peer communication service servers, or radios of communications networks). The interface service 320 receives the request from the device 302. As illustrated, the interface service 320 may be one of a plurality of interface services in the communication server system 306. The interface service 320 determines that the device interface has not yet been assigned a temporary identifier. The request for an identifier is transmitted to a processing service 340B in communication 2. The processing service 340B authenticates the device 302 by an authentication method, for example, one or more of authenticating a permanent device ID (e.g., international mobile subscriber identity, international mobile station equipment identity, integrated circuit card identifier, etc.), looking up whether the device 302 has an active subscription, and a challenge to the device 302.

When the device 302 is authenticated, the processing service 340B will assign a pool ID and a resource ID, perhaps from an ID manager in database 330, and will form a temporary ID from the assigned pool ID and resource ID. The pool ID may be assigned to the device 302, and the resource ID may be assigned to a data resource (e.g., device data 332) associated with the device 302. In an implementation, the temporary ID is formed by encoding data including the assigned pool ID and resource ID. The processing service 340B will further create the device data 332 as an object in the database 330, the device data 332 including data associated with the device 302. The processing service 340B may create a temporary ID of a different type corresponding to each of the interfaces the communication server system 306 uses to obtain services on behalf of the device 302, but all have a common pool ID for the devices assigned to that pool.

When the temporary ID has been generated, it is transmitted to the interface service 320 in communication 3 and then to the device 302 in communication 4. The processing service may also store a database 330 entry that associates the cached device data 334 including the temporary identifiers assigned to or for the device 302. The communication server system 306 may also prevent the resource ID from being used for another request while assigned to the particular temporary ID. The temporary ID transmitted in communication 4 is stored in the device 302. Then, the device 302 makes a subsequent request to the communication server system 306 that contains the temporary ID in communication 5. The interface service 320 receives the communication with the temporary ID. The interface service 320 extracts the pool ID from the temporary ID with an ID extractor 324. In implementations, because this is the first network request after the initial ID allocation and device data generation, it may be that no processing service 340A, 340B has cached device data 334, even if it initially provides the IDs. Implementations are also contemplated in which the cached device data 334 remains from the first processing request. In the illustrated implementation, the message router 326 identifies processing service 340B to process the network request, as there is no processing service with associated cached device data 334. The processing service 340B in communication 7 retrieves the device data 332 data object and caches the object locally as cached device data 334 to effectuate the network request.

In communication 8, the device 302 makes a subsequent communication processing request. The interface service 320 receives the communication with the temporary ID. The interface service 320 extracts the pool ID from the temporary ID with an ID extractor 324. In an implementation, the ID extractor 324 is a worker, which may be logic that implements the majority of the function of a micro-service. The pool ID having been extracted is then transmitted to the message router 326. In an implementation, the message router 326 is an HTTP proxy. In this implementation, the ID extractor may extract the pool ID and use pool ID as an HTTP header for the HTTP proxy for consistent hashing. A message router 326 may transmit from the interface to the identified processing service at least a part of a processing request to process the cached requested resource, the processing request based at least in part on the hashed pool identifier. The message router 326 routes the request from communication 8 to the processing service 340B in communication 9 based on identifying the processing service 340B as being the most likely to have relevant cached data. The message router 326 may use hashing of the extracted pool ID for consistent hashing. The message router 326 may use the hashed pool ID to allocate the request to a processing service 340A, 340B. Because the processing service 340B in communication still has the cached device data 334, processing service 340B will still have data associated with the pool ID that represents the device 302. The message router 326 will then transmit the network function request to processing service 340B. Determining whether the cache of the processing service has cached device data may involve searching a cache of the processing service for the cached requested resource using at least part of the temporary ID, for example, the resource ID. Because the processing service 340B has cached device data 334, the allocation of the network function request to the processing service 340B can be considered a cache hit. This means that the processing service 340B will not be required to fetch the device data 332 again to be cached as cached device data 334. This will save compute resources and reduce latency in the network function.

While not illustrated, other entities, such as communication sub-services, peer communication service servers, or radios of communications networks, may also get device-specific associated temporary IDs for their interfaces in communication 3. The communication sub-services may similarly retrieve the temporary IDs to interface with the processing services 340A, 340B. Because a temporary identifier will have a pool ID associated with the device 302, a message router 326 may use the pool ID to identify a processing service 340B likely to have cached device data 334 and route requests from the communication sub-services to the processing service 340B.

The device 302, communication server system 306, database 330, device data 332, processing services 340A, 340B, and cached device data 334 may be implementations of device 102, communication server system 106, database 130, device data 132, processing services 140A, 140B, and cached device data 134, respectively.

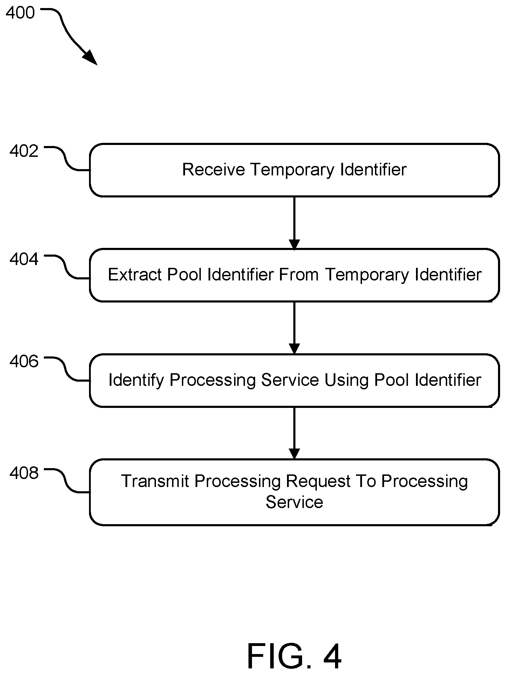

FIG. 4 illustrates example operations 400 of using a temporary ID for communication requests. A receiving operation 402 receives a processing request with an accompanying temporary identifier. The temporary identifier may be transmitted from a requesting entity. In implementations, the requesting entity may be a device or one of a communication sub-service, peer communication service server, or radio of a communication network, operating on behalf of the device and received by an interface of a communication server system. The temporary identifier may have been previously assigned to a communication request from the device, communication sub-service, or another process server system or subsystem on behalf of the device. The temporary identifier has a pool ID and a resource ID. In implementations, the processing request is for a device-specific resource from one or more databases of a communication service server or from a cache of a processing service. In an implementation, the temporary identifier associates the requesting entity with the device-specific resource.

An extraction operation 404 extracts a pool ID from a temporary ID. The extraction operation 404 may use an ID extractor to extract the pool ID from the temporary ID. The extraction operation 404 may be a simple excision from the existing data or may require decoding if the temporary ID is encoded. The pool ID extracted from the temporary ID may be used for consistent hashing

An identifying operation 406 identifies a processing service in which a resource identified by a resource identifier may be cached based on a data association between the pool ID and the processing service. The interface may take the extracted pool ID and use the pool ID to identify a processing service that has recently processed a request on data that is associated with the same pool ID. The interface may use a message router to hash or otherwise relate the pool ID to a processing service that has or recently had cached data that is associated with the same pool ID. This may increase the likelihood that the processing service chosen has cached data relevant to the communication request. The hashing can be accomplished in different ways based on the type of interface. For example, for HTTP connections, the hashing can use extension HTTP headers to contain the identifying package. For other types of interfaces, different types of temporary identifiers can be used for consistent hashing. In implementations using hash-based load balancing to provide soft session affinity, the affinity to a particular destination processing service may be lost when one or more processing services are added or removed from the destination service. Therefore, consistent hashing may be used to reduce the loss of soft affinity. In implementations where a temporary identification package is used, for example, for SBIs, other hashing data that may be used may include one or more of a string type with a name of the identification package, a string type for a path to set for the temporary identification package, and duration type representing the lifetime of the identification package.

The identifying operation 406 may use data elements of the communication service database that associate the processing services and/or the hashed pool IDs associated with data stored in the processing services. For example, the communication server system may have a hasher executable by a server processor and operable to hash the pool identifier, and the identifying operation 406 has an identifier that is usable to identify the identified processing service using the hashed pool identifier. This data may be persistent for as long as the related data is cached in the processing service. While the cached device data is cached in the processing service, the database may lock editing of the corresponding device data in the database until the cached device data is released.

A transmitting operation 408 transmits the request from the interface to the identified processing service. The transmitting operation 408 may transmit from the interface to the identified processing service, at least a part of a processing request to process the cached requested resource, the processing request based at least in part on the hashed pool identifier. The identified processing service may have cached data from a prior network function request that is relevant to the present network function request such that the processing service does not need to retrieve further data from a database outside of local cache storage. Determining whether the cache of the processing service has cached device data may involve searching a cache of the processing service for the cached requested resource using at least part of the temporary ID, for example, the resource ID. Implementations are contemplated where some but not all of the resources are cached such that some of the resources may still need to be fetched from the database outside of local storage. If the processing service does not have the necessary data in its cache, the processing service may fetch the data from the database outside of local storage.

**In** an implementation, each of the operations of the example operations 400 shown in FIG. 4 is a distinct operation. In another implementation, although depicted as distinct operations in FIG. 4, operations 402-408 may not be distinct operations. In other implementations, the example operations 400 shown in FIG. 4 may not have all of the above operations and/or may have other operations in addition to or instead of those listed above. The operations of the example operations 400 shown in FIG. 4 may be performed in another order. Subsets of the operations listed above as part of the example operations 400 shown in FIG. 4 may be used to form their own example operations. The operations of example operations 400 may be repeated in any combination and order any number of times, for instance, continuously or selectively looping to satisfy further communication requests from the device or other communication server system on behalf of the device.

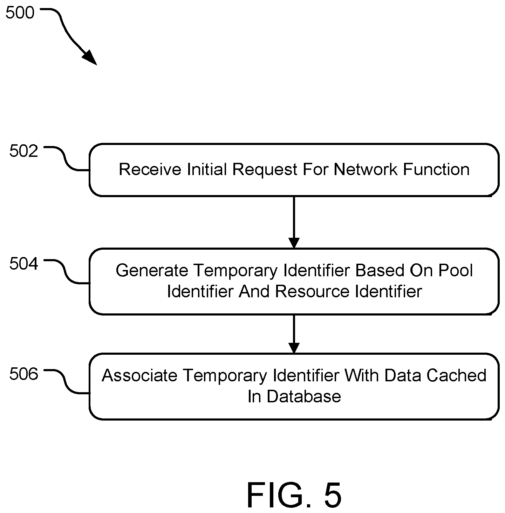

FIG. 5 illustrates example operations 500 of assigning a temporary ID for communication requests. A receiving operation 502 receives an initial request for a network function. The receiving operation 502 receives the request from a device. The request is routed to an interface of a communication server system. The interface determines that the device and its interface have yet to be assigned a temporary ID. The interface selects a processing service to which to route the task of assigning temporary IDs.

A generating operation 504 selects a pool ID for the device and generates temporary IDs based on the pool ID and resource IDs. The pool ID is the same for all temporary IDs assigned to the device. The resource IDs correspond to the data to be accessed when processing the request from the device. The generating may include generating temporary IDs for each interface the communication server system may use to interact with other communication server systems on behalf of the device, all having the same pool ID but differing resource IDs. This may include assigning temporary IDs for communication sub-services. The processing service may receive the initial request and may retrieve data associated with the device from a database or create a new copy of the data for the device in the database. The processing service may responsively authenticate the device by an authentication method, for example, one or more of authenticating a permanent device ID (e.g., international mobile subscriber identity, international mobile station equipment identity, integrated circuit card identifier, etc.), looking up whether the device has an active subscription, and a challenge to the device. When the device is authenticated, a processing service may assign a temporary ID including a pool ID and a resource ID. The assignment of the pool ID may be strategic, for example, assigning within the appropriate address space to a pool that has fewer assigned resource IDs to balance the load. The pool ID may be used for consistent hashing to better distribute requests to processing services more likely to have relevant cached device data. After the temporary ID is generated by the processing service in the generating operation 504, the temporary ID is transmitted to the device to be used in future device requests. Other temporary identifiers generated for the device may be transmitted in the message to other communication server systems such that it can be passed back when other communication server system requests service on behalf of the device. When the new temporary IDs are created, if the device has never been allocated IDs before, a device data object is generated in a database that is associated with the device. This object may contain information related to the device as well as other relevant location and usage data.

An associating operation 506 associates the temporary IDs with data in the database. The temporary IDs having been assembled from a pool ID and resource IDs have an association between the temporary ID and the interfaces and interface resource represented by the resource IDs. When a particular resource ID is used for an operation, the resource ID may not be used by another process, making the temporary ID unique for the network function or elements thereof. Data associations between temporary IDs and devices may be stored in the data object.

In implementations, after the temporary ID has been generated, the temporary ID is transmitted to the device or other communication server system for further requests.

In an implementation, each of the operations of the example operations 500 shown in FIG. 5 is a distinct operation. In another implementation, although depicted as distinct operations in FIG. 5, operations 502-506 may not be distinct operations. In other implementations, the example operations 500 shown in FIG. 5 may not have all of the above operations and/or may have other operations in addition to or instead of those listed above. The operations of the example operations 500 shown in FIG. 5 may be performed in another order. Subsets of the operations listed above as part of the example operations 500 shown in FIG. 5 may be used to form their own example operations. The operations of example operations 500 may be repeated in any combination and order any number of times, for instance, continuously or selectively looping to further allocate temporary IDs.

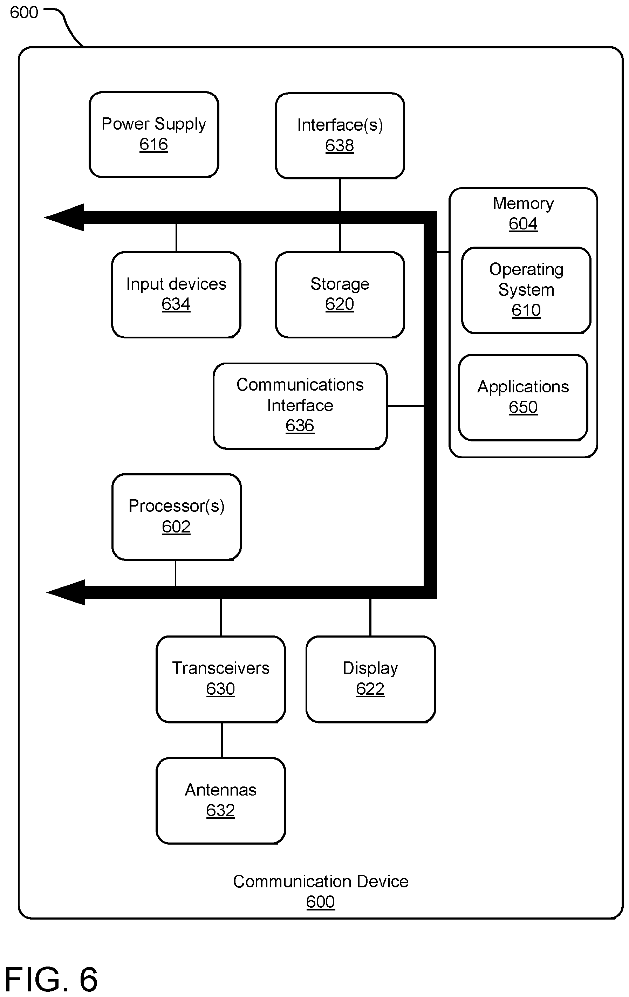

FIG. 6 illustrates an example communication device 600 for implementing the features and operations of the described technology. The device 102, the communication server system 106, and/or the communication sub-service 108 may be embodiments of the communication device 600. The communication device 600 may embody a remote-control device or a physical controlled device and is an example network-connected and/or network-capable device and may be a client device, such as a laptop, mobile device, desktop, tablet; a server/cloud device; an internet-of-things device; an electronic accessory; or another electronic device. The communication device 600 includes one or more processor(s) 602 and a memory 604. The memory 604 generally includes both volatile memory (e.g., RAM) and nonvolatile memory (e.g., flash memory). An operating system 610 resides in the memory 604 and is executed by the processor(s) 602. It should be understood that the communication device 600 may also be a computing device and/or may be a virtual machine of the communication device 600.

In an example communication device 600, as shown in FIG. 6, one or more modules or segments, such as applications 650, workers, HTTP proxies, interface services, interface micro-services, processing services, processing micro-services, data transmission protocols, ID extractors, ID managers, hashers, identifiers, generators, transmitters, receivers, encoders, receiver interfaces, extractors, processing service identifiers, transmitter interfaces, pool identifier associator, coupling identifier generators, device-specific resource generators, coupling identifier associators, coupling identifier transmitters, searchers and message routers are loaded into the operating system 610 on the memory 604 and/or storage 620 and executed by processor(s) 602. The storage 620 may include one or more tangible storage media devices and may store device data, cached device data, databases, coupling IDs, device-specific resources, resource IDs, pool IDs, temporary IDs, address spaces, pools, ID sets, requests, HTTP headers, string type hashes based on specific HTTP headers, HTTPCookie type hashes based on cookies, Boolean or non-Boolean type hashes based on source IP addresses, string type hashes based on specific HTTP queries, uint64 type hashes with virtual nodes for use with a hashring, strings with names of identification packages, strings for paths set for temporary identification, duration type data representing the lifetime of an identification package, an identification package, a permanent ID, an IMSI, an IMEI, an ICCI, pool ID hashes, and data objects locally and globally unique identifiers, requests, responses, and other data and be local to the communication device 600 or may be remote and communicatively connected to the communication device 600.

The communication device 600 includes a power supply 616, which is powered by one or more batteries or other power sources and which provides power to other components of the communication device 600. The power supply 616 may also be connected to an external power source that overrides or recharges the built-in batteries or other power sources.

The communication device 600 may include one or more communication transceivers 630, which may be connected to one or more antenna(s) 632 to provide network connectivity (e.g., mobile phone network, Wi-Fi^{®}, Bluetooth^{®}) to one or more other servers and/or client devices (e.g., mobile devices, desktop computers, or laptop computers). The communication device 600 may further include a network adapter 636, which is a type of communication device. The communication device 600 may use the adapter and any other types of communication devices for establishing connections over a wide-area network (WAN) or local-area network (LAN). It should be appreciated that the network connections shown are examples and that other communication devices and means for establishing a communications link between the communication device 600 and other devices may be used.

The communication device 600 may include one or more input devices 634 such that a user may enter commands and information (e.g., a keyboard or mouse). These and other input devices may be coupled to the server by one or more hardware or virtual interfaces 638, such as a serial port interface, ethernet port, parallel port, or universal serial bus (USB). The communication device 600 may further include a display 622, such as a touch screen display.

The communication device 600 may include a variety of tangible processor-readable storage media and intangible processor-readable communication signals. Tangible processor-readable storage can be embodied by any available media that can be accessed by the communication device 600 and includes both volatile and nonvolatile storage media, removable and non-removable storage media. Tangible processor-readable storage media excludes communications signals (e.g., signals per se) and includes volatile and nonvolatile, removable and non-removable storage media implemented in any method or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the communication device 600. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Various software components described herein are executable by one or more processors, which may include logic machines configured to execute hardware or firmware instructions. For example, the processors may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

Aspects of processors and storage may be integrated together into one or more hardware logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The terms "module," "program," and "engine" may be used to describe an aspect of a remote-control device and/or a physically controlled device implemented to perform a particular function. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

It will be appreciated that a "service," as used herein, is an application program executable across one or multiple user sessions. A service may be available to one or more system components, programs, and/or other services. In some implementations, a service may run on one or more server computing devices.

The logical operations making up embodiments of the invention described herein may be referred to variously as operations, steps, objects, or modules. Furthermore, it should be understood that logical operations may be performed in any order, adding or omitting operations as desired, regardless of whether operations are labeled or identified as optional, unless explicitly claimed otherwise or a specific order is inherently necessitated by the claim language.

While this specification contains many specific implementation details, these should not be construed as limitations on the scope of any inventions or of what may be claimed, but rather as descriptions of features specific to particular implementations of the particular described technology. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

An example method for allocating a device-specific resource from one or more databases is disclosed. The method includes receiving, at an interface, a coupling identifier including a pool identifier and a resource identifier, as part of a processing request from a requesting entity, the processing request including a request for the device-specific resource, wherein the coupling identifier associates the requesting entity with the device-specific resource based on the resource identifier, extracting, at the interface, the pool identifier from the coupling identifier, identifying, by the interface, the processing service in which the device-specific resource associated with the resource identifier is cached, based on the pool identifier, and transmitting, from the interface to the identified processing service, at least a part of the processing request to process the cached requested device-specific resource.

Another example method of any preceding method is provided, the method further including receiving an initial processing request from a device, generating the device-specific resource based on the device, responsive to the initial processing request, associating the pool identifier with the device and the device-specific resource, generating the coupling identifier based on the pool identifier and a resource identifier, and associating the coupling identifier with data in the cached object from the one or more databases.

Another example method of any preceding method is provided, the method further including transmitting the coupling identifier to the requesting entity.

Another example method of any preceding method is provided, wherein the pool identifier represents a pool of resource identifiers in an address space.

Another example method of any preceding method is provided wherein the address space is one of a plurality of address spaces and each of the plurality of address spaces has a same number of pools of resource identifiers.

Another example method of any preceding method is provided, the method further including searching a cache of the processing service for the cached requested resource using at least part of the coupling identifier.

Another example method of any preceding method is provided, the method further including hashing the pool identifier and identifying the identified processing service using the hashed pool identifier.

An example communication server system for allocating a device-specific resource from one or more databases is provided. The communication server system includes a processor and a memory, the processor configured to execute operations stored in the memory. The communication server system further includes a receiver interface operable to receive a coupling identifier including a pool identifier and a resource identifier, as part of a processing request from a requesting entity, the processing request including a request for the device-specific resource, wherein the coupling identifier associates the requesting entity with the device-specific resource based on the resource identifier, an extractor executable by the processor to extract, at the interface, the pool identifier from the coupling identifier, a processing service identifier executable by the processor to identify, by the interface, the processing service in which the device-specific resource associated with the resource identifier is cached, based on the pool identifier, and a transmitter interface operable to transmit, from the interface to the identified processing service, at least a part of the processing request to process the cached requested device-specific resource.

Another example communication server system of any preceding communication server system is provided, wherein the receiver is further operable to receive an initial processing request from the device, wherein the receiver interface is further operable to receive an initial processing request. The communication server system further includes a generator executable by the processor to generate the device-specific resource based on the device, responsive to the initial processing request, a pool identifier associator executable by the processor to associate the pool identifier with the device and the device-specific resource, a generator executable by the processor to generate the coupling identifier based on the pool identifier and a resource identifier, and a coupling identifier associator executable by the processor to associate the coupling identifier with data in the cached object from the one or more databases.

Another example communication server system of any preceding communication server system is provided, the communication server system further including a coupling identifier transmitter interface operable to transmit the coupling identifier to the requesting entity.

Another example communication server system of any preceding communication server system is provided, wherein the pool identifier is usable to represent a pool of resource identifiers in an address space.

Another example communication server system of any preceding communication server system is provided, wherein the address space is one of a plurality of address spaces and each of the plurality of address spaces has a same number of pools of resource identifiers.

Another example communication server system of any preceding communication server system is provided, the communication server system further including a searcher executable by the processor and operable to search a cache of the processing service for the cached requested resource using at least part of the coupling identifier.

Another example communication server system of any preceding communication server system is provided, wherein the processing service identifier further includes a hasher executable by the processor and operable to hash the pool identifier, wherein the identifier is usable to identify the identified processing service using the hashed pool identifier.

An example one or more tangible processor-readable storage media embodied with instructions for executing on one or more processors and circuits of a computing device a process for allocating resources from one or more databases is provided. The process includes receiving, at an interface, a coupling identifier including a pool identifier and a resource identifier, as part of a processing request from a requesting entity, the processing request including a request for the device-specific resource, extracting, at the interface, the pool identifier from the coupling identifier, identifying, by the interface, the processing service in which the device-specific resource associated with the resource identifier is cached, based on the pool identifier, and transmitting, from the interface to the identified processing service, at least a part of the processing request to process the cached requested device-specific resource.

One or more other example tangible processor-readable storage media of any preceding media is provided, the process further including receiving an initial processing request from a device, generating the device-specific resource based on the device, responsive to the initial processing request, associating the pool identifier with the device and the device-specific resource, generating the coupling identifier based on the pool identifier and a resource identifier, wherein the association of the requesting entity with the device-specific resource is based on the resource identifier, and associating the coupling identifier with data in the cached object from the one or more databases.

One or more other example tangible processor-readable storage media of any preceding media is provided, the process further including transmitting the coupling identifier to the requesting entity.

One or more other example tangible processor-readable storage media of any preceding media is provided, wherein the pool identifier represents a pool of resource identifiers in an address space.

One or more other example tangible processor-readable storage media of any preceding media is provided, wherein the address space is one of a plurality of address spaces and each of the plurality of address spaces has a same number of pools of resource identifiers.

One or more other example tangible processor-readable storage media of any preceding media is provided, the process further including searching a cache of the processing service for the cached requested resource using at least part of the coupling identifier.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

A number of implementations of the described technology have been described. Nevertheless, it will be understood that various modifications can be made without departing from the scope of the recited claims.

## Claims

1. A method (400) for allocating a device-specific resource (132) from one or more databases (130), comprising:
receiving an initial processing request from a device;
generating a device-specific resource based on the device, responsive to the initial processing request;
associating a pool identifier with the device and the device-specific resource;
generating a coupling identifier based on the pool identifier and a resource identifier; and
associating the coupling identifier with data, comprising the device specific resource, in a cached object from the one or more databases;
transmitting the coupling identifier to the device, the device being a requesting entity; and
subsequently:
receiving (402), at an interface (320), the coupling identifier including the pool identifier (262A) and the resource identifier (262A-1), as part of a processing request from the requesting entity (302), the processing request including a request for the device-specific resource (132), wherein the coupling identifier associates the requesting entity (302) with the device-specific resource (132) based on the resource identifier (262A-1);
extracting (404), at the interface (320), the pool identifier (262A) from the coupling identifier;
identifying (406), by the interface (320), the processing service (140B) in which the device-specific resource (132) associated with the resource identifier (262A-1) is cached, based on the pool identifier (262A); and
transmitting (408), from the interface (320) to the identified processing service (140B), at least a part of the processing request to process the cached requested device-specific resource (132).

2. The method of claim 1, wherein the pool identifier represents a pool of resource identifiers in an address space.

3. The method of claim 2, wherein the address space is one of a plurality of address spaces and each of the plurality of address spaces has a same number of pools of resource identifiers.

4. The method of claim 1, further comprising:
searching a cache of the processing service for the cached requested resource using at least part of the coupling identifier.

5. The method of claim 1, wherein the operation of identifying further comprises hashing the pool identifier; and
identifying the identified processing service using the hashed pool identifier.

6. A communication server system (106) for allocating a device-specific resource (132) from one or more databases (130) having a processor (602) and a memory (604), the processor (602) configured to execute operations stored in the memory (604), the communication server system (106) comprising:
a generator executable by the processor to generate the device-specific resource based on the device, responsive to an initial processing request received from a device;
a pool identifier associator executable by the processor to associate a pool identifier with the device and the device-specific resource;
a generator executable by the processor to generate a coupling identifier based on the pool identifier and a resource identifier; and
a coupling identifier associator executable by the processor to associate the coupling identifier with data, comprising the device specific resource, in a cached object from the one or more databases;
a coupling identifier transmitter interface operable to transmit the coupling identifier to the device, the device being a requesting entity; and subsequently:
a receiver interface (320) operable to receive (402) the coupling identifier including the pool identifier (262A) and the resource identifier (262A-1), as part of a processing request from the requesting entity (302), the processing request including a request for the device-specific resource (132), wherein the coupling identifier associates the requesting entity (302) with the device-specific resource (132) based on the resource identifier (262A-1);
an extractor executable by the processor (602) to extract (404), at the interface (320), the pool identifier (262A) from the coupling identifier;
a processing service identifier executable by the processor (602) to identify (406), by the interface (320), the processing service (140B) in which the device-specific resource (132) associated with the resource identifier (262A-1) is cached, based on the pool identifier (262A); and
a transmitter interface operable to transmit (408), from the interface (320) to the identified processing service (140B), at least a part of the processing request to process the cached requested device-specific resource (132).

7. The communication server system of claim 6, wherein the pool identifier is usable to represent a pool of resource identifiers in an address space.

8. The communication server system of claim 7, wherein the address space is one of a plurality of address spaces and each of the plurality of address spaces has a same number of pools of resource identifiers.

9. The communication server system of claim 6, further comprising:
a searcher executable by the processor and operable to search a cache of the processing service for the cached requested resource using at least part of the coupling identifier.

10. The communication server system of claim 6, wherein the processing service identifier further comprises:
a hasher executable by the processor and operable to hash the pool identifier, wherein the identifier is usable to identify the identified processing service using the hashed pool identifier.

11. One or more tangible processor-readable storage media (604) embodied with instructions for executing on one or more processors (602) and circuits of a computing device a process (400) for allocating resources from one or more databases (130), the process (400) comprising:
receiving an initial processing request from a device;
generating a device-specific resource based on the device, responsive to the initial processing request;
associating a pool identifier with the device and the device-specific resource;
generating a coupling identifier based on the pool identifier and a resource identifier; and
associating the coupling identifier with data, comprising the device specific resource, in a cached object from the one or more databases;
transmitting the coupling identifier to the device, the device being a requesting entity; and
subsequently:
receiving (402), at an interface (320), the coupling identifier including the pool identifier (262A) and the resource identifier (262A-1), as part of a processing request from the requesting entity (302), the processing request including a request for the device-specific resource (132);
extracting (404), at the interface (320), the pool identifier (262A) from the coupling identifier;
identifying (406), by the interface (320), the processing service (140B) in which the device-specific resource (132) associated with the resource identifier (262A-1) is cached, based on the pool identifier (262A); and
transmitting (408), from the interface (320) to the identified processing service (140B), at least a part of the processing request to process the cached requested device-specific resource (132).

## Patentansprüche

1. Verfahren (400) zum Zuweisen einer vorrichtungsspezifischen Ressource (132) aus einer oder mehreren Datenbanken (130), umfassend:
Empfangen einer anfänglichen Verarbeitungsanfrage von einer Vorrichtung;
Generieren einer vorrichtungsspezifischen Ressource basierend auf der Vorrichtung als Reaktion auf die anfängliche Verarbeitungsanfrage;
Zuordnen einer Poolkennung zu der Vorrichtung und der vorrichtungsspezifischen Ressource;
Generieren einer Kopplungskennung basierend auf der Poolkennung und einer Ressourcenkennung; und
Zuordnen der Kopplungskennung zu Daten, umfassend die vorrichtungsspezifische Ressource, in einem zwischengespeicherten Objekt aus der einen oder den mehreren Datenbanken;
Übertragen der Kopplungskennung an die Vorrichtung, wobei die Vorrichtung eine anfragende Entität ist; und
anschließend:
Empfangen (402), an einer Schnittstelle (320), der Kopplungskennung, welche die Poolkennung (262A) und die Ressourcenkennung (262A-1) beinhaltet, als Teil einer Verarbeitungsanfrage von der anfragenden Entität (302), wobei die Verarbeitungsfanfrage eine Anfrage für die vorrichtungsspezifische Ressource (132) beinhaltet, wobei die Kopplungskennung die anfragende Entität (302) zu der vorrichtungsspezifischen Ressource (132) basierend auf der Ressourcenkennung (262A-1) zuordnet;
Extrahieren (404), an der Schnittstelle (320), der Poolkennung (262A) aus der Kupplungskennung;
Identifizieren (406), durch die Schnittstelle (320), des Verarbeitungsdienstes (140B), in dem die der Ressourcenkennung (262A-1) zugeordnete vorrichtungsspezifische Ressource (132) zwischengespeichert ist, basierend auf der Poolkennung (262A); und
Übertragen (408), von der Schnittstelle (320) an den identifizierten Verarbeitungsdienst (140B), mindestens eines Teils der Verarbeitungsanfrage zum Verarbeiten der zwischengespeicherten angefragten vorrichtungsspezifischen Ressource (132).

2. Verfahren nach Anspruch **1,** wobei die Poolkennung einen Pool von Ressourcenkennungen in einem Adressraum darstellt.

3. Verfahren nach Anspruch **2,** wobei der Adressraum einer von einer Vielzahl von Adressräumen ist und jeder der Vielzahl von Adressräumen die gleiche Anzahl an Pools von Ressourcenkennungen aufweist.

4. Verfahren nach Anspruch **1,** ferner umfassend:
Suchen eines Zwischenspeichers des Verarbeitungsdienstes für die zwischengespeicherte angefragte Ressource unter Verwendung mindestens eines Teils der Kopplungskennung.

5. Verfahren nach Anspruch 1, wobei der Vorgang des Identifizierens ferner Hashing der Poolkennung umfasst; und
Identifizieren des identifizierten Verarbeitungsdienstes unter Verwendung der gehashten Poolkennung.

6. Kommunikationsserversystem (106) zum Zuweisen einer vorrichtungsspezifischen Ressource (132) aus einer oder mehreren Datenbanken (130), aufweisend einen Prozessor (602) und einen Speicher (604), wobei der Prozessor (602) dazu konfiguriert ist, in dem Speicher (604) gespeicherte Vorgänge auszuführen, wobei das Kommunikationsserversystem (106) Folgendes umfasst:
einen Generator, der durch den Prozessor ausführbar ist, um die vorrichtungsspezifische Ressource basierend auf der Vorrichtung als Reaktion auf eine von einer Vorrichtung empfangene anfängliche Verarbeitungsanfrage zu generieren;
einen Poolkennungszuordner, der durch den Prozessor ausführbar ist, um der Vorrichtung und der vorrichtungsspezifischen Ressource eine Poolkennung zuzuordnen;
einen Generator, der durch den Prozessor ausführbar ist, um eine Kopplungskennung basierend auf der Poolkennung und einer Ressourcenkennung zu generieren; und
einen Kopplungskennungszuordner, der durch den Prozessor ausführbar ist, um die Kopplungskennung Daten, umfassend die vorrichtungsspezifische Ressource, in einem zwischengespeicherten Objekt aus der einen oder den mehreren Datenbanken zuzuordnen;
eine Überträgerschnittstelle für Kopplungskennungen, die dazu betreibbar ist, die Kopplungskennung an die Vorrichtung zu übertragen, wobei die Vorrichtung eine anfragende Entität ist; und anschließend:
eine Empfängerschnittstelle (320), die dazu betreibbar ist, die Kopplungskennung, welche die Poolkennung (262A) und die Ressourcenkennung (262A-1) beinhaltet, als Teil einer Verarbeitungsanfrage von der anfragenden Entität (302) zu empfangen(402), wobei die Verarbeitungsanfrage eine Anfrage für die vorrichtungsspezifische Ressource (132) beinhaltet, wobei die Kopplungskennung die anfordernde Entität (302) der vorrichtungsspezifischen Ressource (132) basierend auf der Ressourcenkennung (262A-1) zuordnet;
einen Extraktor, der durch den Prozessor (602) ausführbar ist, um die Poolkennung (262A), an der Schnittstelle (320), aus der Kopplungskennung zu extrahieren (404);
einen Verarbeitungsdienstidentifizierer, der durch den Prozessor (602) ausführbar ist, um den Verarbeitungsdienst (140B), in dem die der Ressourcenkennung (262A-1) zugeordnete vorrichtungsspezifische Ressource (132) zwischengespeichert ist, basierend auf der Poolkennung (262A) durch die Schnittstelle (320) zu identifizieren (406); und
eine Überträgerschnittstelle, die dazu betreibbar ist, mindestens einen Teil der Verarbeitungsanfrage von der Schnittstelle (320) an den identifizierten Verarbeitungsdienst (140B) zu übertragen (408), um die zwischengespeicherte angefragte vorrichtungsspezifische Ressource (132) zu verarbeiten.

7. Kommunikationsserversystem nach Anspruch 6, wobei die Poolkennung dazu verwendbar ist, einen Pool von Ressourcenkennungen in einem Adressraum darzustellen.

8. Kommunikationsserversystem nach Anspruch 7, wobei der Adressraum einer von einer Vielzahl von Adressräumen ist und jeder der Vielzahl von Adressräumen die gleiche Anzahl an Pools von Ressourcenkennungen aufweist.

9. Kommunikationsserversystem nach Anspruch 6, ferner umfassend:
einen Sucher, der durch den Prozessor ausführbar und dazu betreibbar ist, einen Zwischenspeicher des Verarbeitungsdienstes für die zwischengespeicherte angefragte Ressource unter Verwendung mindestens eines Teils der Kopplungskennung zu suchen.

10. Kommunikationsserversystem nach Anspruch 6, wobei der Verarbeitungsdienstidentifizierer ferner Folgendes umfasst:
einen Hasher, der durch den Prozessor ausführbar und dazu betreibbar ist, die Poolkennung zu hashen, wobei die Kennung dazu verwendbar ist, den identifizierten Verarbeitungsdienst unter Verwendung der gehashten Poolkennung zu identifizieren.

11. Ein oder mehrere physische, prozessorlesbare Speichermedien (604), die mit Anweisungen zum Ausführen, auf einem oder mehreren Prozessoren (602) und Schaltungen einer Rechenvorrichtung, eines Prozesses (400) zum Zuweisen von Ressourcen aus einer oder mehreren Datenbanken (130) verkörpert sind, wobei der Prozess (400) Folgendes umfasst:
Empfangen einer anfänglichen Verarbeitungsanfrage von einer Vorrichtung;
Generieren einer vorrichtungsspezifischen Ressource basierend auf der Vorrichtung als Reaktion auf die anfängliche Verarbeitungsanfrage;
Zuordnen einer Poolkennung zu der Vorrichtung und der vorrichtungsspezifischen Ressource;
Generieren einer Kopplungskennung basierend auf der Poolkennung und einer Ressourcenkennung; und
Zuordnen der Kopplungskennung zu Daten, umfassend die vorrichtungsspezifische Ressource, in einem zwischengespeicherten Objekt aus der einen oder den mehreren Datenbanken;
Übertragen der Kopplungskennung an die Vorrichtung, wobei die Vorrichtung eine anfragende Entität ist; und anschließend:
Empfangen (402), an einer Schnittstelle (320), der Kopplungskennung, welche die Poolkennung (262A) und die Ressourcenkennung (262A-1) beinhaltet, als Teil einer Verarbeitungsanfrage von der anfragenden Entität (302), wobei die Verarbeitungsanfrage eine Anfrage für die vorrichtungsspezifische Ressource (132) beinhaltet;
Extrahieren (404), an der Schnittstelle (320), der Poolkennung (262A) aus der Kopplungskennung;
Identifizieren (406), durch die Schnittstelle (320), des Verarbeitungsdienstes (140B), in dem die der Ressourcenkennung (262A-1) zugeordnete vorrichtungsspezifische Ressource (132) zwischengespeichert ist, basierend auf der Poolkennung (262A); und
Übertragen (408), von der Schnittstelle (320) an den identifizierten Verarbeitungsdienst (140B), mindestens eines Teils der Verarbeitungsanfrage zum Verarbeiten der zwischengespeicherten angefragten vorrichtungsspezifischen Ressource (132).

## Revendications

1. Procédé (400) d'allocation d'une ressource spécifique à un dispositif (132) à partir d'une ou plusieurs bases de données (130), comprenant :
la réception d'une demande de traitement initiale provenant d'un dispositif ;
la génération d'une ressource spécifique au dispositif en fonction du dispositif, en réponse à la demande de traitement initiale ;
l'association d'un identifiant de pool au dispositif et à la ressource spécifique au dispositif ;
la génération d'un identifiant de couplage basé sur l'identifiant de pool et un identifiant de ressource ; et
l'association de l'identifiant de couplage à des données, comprenant la ressource spécifique au dispositif, dans un objet mis en cache à partir d'une ou plusieurs bases de données ;
la transmission de l'identifiant de couplage au dispositif, le dispositif étant une entité demandeuse ; et
ensuite :
la réception (402), au niveau d'une interface (320), de l'identifiant de couplage comprenant l'identifiant de pool (262A) et l'identifiant de ressource (262A-1), dans le cadre d'une demande de traitement provenant de l'entité demandeuse (302), la demande de traitement comprenant une demande de ressource spécifique au dispositif (132), l'identifiant de couplage associant l'entité demandeuse (302) à la ressource spécifique au dispositif (132) sur la base de l'identifiant de ressource (262A-1) ;
l'extraction (404), au niveau de l'interface (320), de l'identifiant de pool (262A) à partir de l'identifiant de couplage ;
l'identification (406), par l'interface (320), du service de traitement (140B) dans lequel la ressource spécifique au dispositif (132) associée à l'identifiant de ressource (262A-1) est mise en cache, sur la base de l'identifiant de pool (262A) ; et
la transmission (408), de l'interface (320) au service de traitement identifié (140B), d'au moins une partie de la demande de traitement pour traiter la ressource spécifique au dispositif demandée mise en cache (132).

2. Procédé selon la revendication 1, dans lequel l'identifiant de pool représente un pool d'identifiants de ressources dans un espace d'adressage.

3. Procédé selon la revendication 2, dans lequel l'espace d'adressage est l'un d'une pluralité d'espaces d'adressage et chacun de la pluralité d'espaces d'adressage possède un même nombre de pools d'identifiants de ressources.

4. Procédé selon la revendication 1, comprenant en outre :
la recherche dans un cache du service de traitement de la ressource demandée mise en cache en utilisant au moins une partie de l'identifiant de couplage.

5. Procédé selon la revendication 1, dans lequel l'opération d'identification comprend en outre le hachage de l'identifiant de pool ; et
l'identification du service de traitement identifié à l'aide de l'identifiant de pool haché.

6. Système de serveur de communication (106) permettant d'allouer une ressource spécifique à un dispositif (132) à partir d'une ou plusieurs bases de données (130) comprenant un processeur (602) et une mémoire (604), le processeur (602) étant configuré pour exécuter des opérations stockées dans la mémoire (604), dans lequel le système de serveur de communication (106) comprend :
un générateur exécutable par le processeur pour générer la ressource spécifique au dispositif en fonction du dispositif, en réponse à une demande de traitement initiale reçue d'un dispositif ;
un associateur d'identifiant de pool exécutable par le processeur pour associer un identifiant de pool au dispositif et à la ressource spécifique au dispositif ;
un générateur exécutable par le processeur pour générer un identifiant de couplage basé sur l'identifiant de pool et un identifiant de ressource ; et
un associateur d'identifiant de couplage exécutable par le processeur pour associer l'identifiant de couplage à des données, comprenant la ressource spécifique au dispositif, dans un objet mis en cache à partir d'une ou plusieurs bases de données ;
une interface de transmission d'identifiant de couplage permettant de transmettre l'identifiant de couplage au dispositif, le dispositif étant une entité demandeuse ; et ensuite :
une interface de réception (320) pouvant être utilisée pour recevoir (402) l'identifiant de couplage comprenant l'identifiant de pool (262A) et l'identifiant de ressource (262A-1), dans le cadre d'une demande de traitement provenant de l'entité demandeuse (302), la demande de traitement comprenant une demande de ressource spécifique au dispositif (132), l'identifiant de couplage associant l'entité demandeuse (302) à la ressource spécifique au dispositif (132) sur la base de l'identifiant de ressource (262A-1) ;
un extracteur exécutable par le processeur (602) pour extraire (404), au niveau de l'interface (320), l'identifiant de pool (262A) de l'identifiant de couplage ;
un identifiant de service de traitement exécutable par le processeur (602) pour identifier (406), par l'interface (320), le service de traitement (140B) dans lequel la ressource spécifique au dispositif (132) associée à l'identifiant de ressource (262A-1) est mise en cache, sur la base de l'identifiant de pool (262A) ; et
une interface **d'émetteur** pouvant transmettre (408), de l'interface (320) au service de traitement identifié (140B), au moins une partie de la demande de traitement pour traiter la ressource spécifique au dispositif demandée mise en cache (132).

7. Système de serveur de communication selon la revendication 6, dans lequel l'identifiant de pool peut être utilisé pour représenter un pool d'identifiants de ressources dans un espace d'adressage.

8. Système de serveur de communication selon la revendication 7, dans lequel l'espace d'adressage est l'un d'une pluralité d'espaces d'adressage et chacun de la pluralité d'espaces d'adressage possède un même nombre de pools d'identifiants de ressources.

9. Système de serveur de communication selon la revendication 6, comprenant en outre :
un moteur de recherche exécutable par le processeur et pouvant rechercher dans un cache du service de traitement la ressource demandée mise en cache en utilisant au moins une partie de l'identifiant de couplage.

10. Système de serveur de communication selon la revendication 6, dans lequel l'identifiant de service de traitement comprend en outre :
un hachage exécutable par le processeur et pouvant hacher l'identifiant de pool, l'identifiant étant utilisable pour identifier le service de traitement identifié à l'aide de l'identifiant de pool haché.

11. Un ou plusieurs supports de stockage tangibles lisibles par processeur (604) intégrant des instructions pour exécuter sur un ou plusieurs processeurs (602) et circuits d'un dispositif informatique un processus (400) d'allocation de ressources à partir d'une ou plusieurs bases de données (130), le processus (400) comprenant :
la réception d'une demande de traitement initiale en provenance d'un dispositif ;
la génération d'une ressource spécifique au dispositif en fonction du dispositif, en réponse à la demande de traitement initiale ;
l'association d'un identifiant de pool au dispositif et à la ressource spécifique au dispositif ;
la génération d'un identifiant de couplage basé sur l'identifiant de pool et un identifiant de ressource ; et
l'association de l'identifiant de couplage à des données, comprenant la ressource spécifique au dispositif, dans un objet mis en cache à partir d'une ou plusieurs bases de données ;
la transmission de l'identifiant de couplage au dispositif, le dispositif étant une entité demandeuse ; et ensuite :
la réception (402), au niveau d'une interface (320), de l'identifiant de couplage comprenant l'identifiant de pool (262A) et l'identifiant de ressource (262A-1), dans le cadre d'une demande de traitement provenant de l'entité demandeuse (302), la demande de traitement comprenant une demande de ressource spécifique au dispositif (132) ;
l'extraction (404), au niveau de l'interface (320), l'identifiant de pool (262A) à partir de l'identifiant de couplage ;
l'identification (406), par l'interface (320), du service de traitement (140B) dans lequel la ressource spécifique au dispositif (132) associée à l'identifiant de ressource (262A-1) est mise en cache, sur la base de l'identifiant de pool (262A) ; et
la transmission (408), de l'interface (320) au service de traitement identifié (140B), d'au moins une partie de la demande de traitement pour traiter la ressource spécifique au dispositif demandée mise en cache (132).
